# EUROPÄISCHE PATENTSCHRIFT

(11) **EP 2 478 338 B1**
(45) Veröffentlichungstag und Bekanntmachung des Hinweises auf die Patenterteilung: **14.10.2015**
(21) Anmeldenummer: 10776925.9
(22) Anmeldetag: 15.09.2010
(51) Int. Cl.: G01D 21/00

(54) **ANORDNUNG ZUR BESTIMMUNG VON VERDREHUNGEN VON LANG GESTRECKTEN KÖRPERN**
ARRANGEMENT FOR DETERMINING TORSIONS OF ELONGATE BODIES
DISPOSITIF PERMETTANT DE DÉTERMINER DES TORSIONS D'ÉLÉMENTS ALLONGÉS

(30) Priorität: 16.09.2009 DE 102009041788
(43) Veröffentlichungstag der Anmeldung: 25.07.2012
(73) Patentinhaber: micro-sensys GmbH, 99098 Erfurt (DE)
(72) Erfinder: JURISCH, Reinhard, 99438 Meckfeld / Bad Berka (DE); PEITSCH, Peter, 99099 Erfurt (DE)
(74) Vertreter: Pfeiffer, Rolf-Gerd
(86) Internationale Anmeldenummer: PCT/DE2010/001093
(87) Internationale Veröffentlichungsnummer: WO 2011/032545

(56) Entgegenhaltungen:
- EP-A2- 0 285 827
- EP-A2- 1 220 236
- DE-A1- 3 909 774

## Beschreibung

Die vorliegende Erfindung bezieht sich auf ein System zur Bestimmung von Torsionen in langgestreckten und in sich verdrehbaren Objekten, insbesondere von elektrischen Kabeln. Derartige in vorliegender Erfindung besonders in Betracht kommende Kabel finden insbesondere bei Schwerlastkranen, Kohlebaubaggern etc. Verwendung. Dort unterliegen sie durch den Betrieb dieser Anlagen einem ständigen Auf- und Abrollprozess unter Zugbelastung. Dabei neigen diese Kabel, aufgrund ihres inneren Aufbaus und unterschiedlicher Auf- und Abrollgeschwindigkeiten, zu Torsionen, die sich sehr nachteilig auf ihre Lebensdauer auswirken, da elektrische Leitungen im Kabelinneren als auch der Kabelmantel einem ständigen Zug- und Abscherprozess unterworfen sind. Eine positive gegenläufige Beeinflussung könnte man bei der Feststellung des Auftritts von unzulässigen Torsionsüberschreitungen und/oder Streckungen durch eine gezielte Ansteuerung der Motoren, die die Kabeltrommelrotation beeinflussen, erreichen. Dazu müsste man aber erst einmal über eine Möglichkeit verfügen, um eine Überschreitung einer zulässigen Kabeltorsion ermitteln zu können. Außer rein empirischen Erfahrungen, welche Kabelaufroll- respektive Abrollgeschwindigkeiten nicht überoder unterschritten werden dürfen, sind keine selbstkontrollierenden Verfahren oder Vorrichtungen nach dem gegenwärtigen Stand der Technik bekannt. Dies geht zu Lasten der Lebensdauer u.U. extrem teuer Kabelsätze, die aus Sicherheitsgründen einem relativ häufigen Komplettaustausch unterworfen werden müssen.
Zwar sind im Ansatz bereits verschiede, mit zusätzlichen Mitteln ausgerüstete Kabel grundsätzlich bekannt geworden, die sich auf eine Überwachung des Kabelzustands beziehen, jedoch nicht im Sinne vorliegender Erfindung.
So beschreibt DE 195 27 972 B4 ein Kabel, welches zur Detektion von Wassereinbrüchen konzipiert ist. Dort sind elektrische Messleiter im Kabelmantel integriert vorgesehen, deren Widerstandsänderung bei Wassereintritt registrierbar ist. Mit dieser Lösung ist also nur ein drohender Ausfall des Kabels bei bereits erfolgter Schädigung registrierbar.
DE 198 14 540 A1 beschreibt ein Kabel und eine Messvorrichtung zur Kabellängenbestimmung, bei denen das Kabel an definierten Längspositionen mit Datenträgern, wie Transpondern, Barcodes oder Magnetstreifen versehen ist, die von einer dazu gehörigen, allerdings nicht näher beschriebenen Ausleseeinrichtung nur lateral auslesbar sind.
Weiterhin beschreibt EP 1 220 236 A1 ein Kabel, bei dem längs des Kabels Informationsgeber kraft- und/oder formschlüssig mit dem Kabel verbunden sind, wobei in diesen auslesbaren Kennungsgebern anlagenspezifische, Verlegungsdaten, wie Schalt- bzw. Verdrahtungsplandaten gespeichert sind.
Durch diesen vorbeschriebenen Stand der Technik soll lediglich dokumentiert werden, dass die grundsätzliche Art der Herstellung von Kabeln, die mit Informationsträgern versehen sind, nach diesem Stand der Technik als bekannt vorausgesetzt werden kann.

Auch sind für andere Verwendungen, als der hier vorgesehenen, Ausleseeinrichtungen bekannt, die gezielt die Anwesenheit eines Transponders und Auslesung in ihm gespeicherter Daten mittels RFID-Technologie zu ermitteln gestatten. Im Firmenprospekt der Fa. Magellan Technology Pty Ltd. (May 2007) ist ein kastenförmiger Tunnelreader (MTR-1310) beschrieben, der im Durchlauf eine Erkennung von Einzelprodukten, die mit beliebigen über größere Distanzen auslesbaren Transpondern versehen sind. Vergleichbare Lesegeräte für die Auslesung von mit Transpondern versehene Artikel, wie bspw. Pakete, bietet die Fa. scemtac Transponder Technology GmbH an (vgl. Firmenprospekt, 13,56 MHz Tunnel-Antenna, unter www.scemtec.com). Auch gehört es zum Stand der Technik, eine große Anzahl von Transpondern (Tags), bspw. in Wäschereien, in einem Arbeitsgang zu lesen, die dabei unabhängig von ihrer Position von einem Tunnel-Reader erfasst werden. Aufgrund der dortigen Messaufgabe und der Dimensionierung der Lesevorrichtung, die zur Aufnahme großer Wäschesäcke konzipiert ist, kommen dort auch nur HF-Transponder oder solche mit großen Antennen, die über die durch die dortige Vorrichtung vorgegebene Entfernung ausgelesen werden können, zum Einsatz.

Aufgabe vorliegender Erfindung ist die in-situ Bestimmung von Verdrehungen (Torsion) von lang gestreckten Körpern (Stranggut), insbesondere von in sich verdrehbaren Körpern mit einem runden Querschnitt, wie bspw. längeren elektrischen Leitungskabeln, die diese während ihrer Bewegung, bspw. durch Auf- und Abrollen eines Kabelstrangs, erfahren. Wenn hier und im weiteren von einem Kabel als besonders bedeutsamem Beispiel die Rede ist, stellt das keine Beschränkung vorliegender Erfindung allein auf solche Objekte dar. Schläuche, Rohre und andere zylindrische lang gestreckte Körper fallen als mögliche Messobjekte ebenfalls unter vorliegende Erfindung.

Zur Umsetzung vorliegender Erfindung ist es zunächst erforderlich, dass das Messobjekt (Kabel) in seinem Außenumfangsbereich in vorgebaren Abständen und Winkelpositionen mit so genannten, an sich bekannten, üblichen passiven, induktiv gekoppelt auslesbaren Transpondern bestückt ist, wobei die Ebene der Antenne des Transponders im äußeren Bereich des Kabels (bspw. nicht tiefer als 30% des Kabelradius) und im Wesentlichen parallel zur Oberfläche des Kabels ausgerichtet ist. Was darunter zu verstehen ist, wird im Rahmen des Ausführungsbeispiels erläutert.

Die Aufgabe der Erfindung wird durch die kennzeichnenden Merkmale des Patentanspruchs 1 gelöst. Vorteilhafte Ausgestaltungen sind Gegenstand der nachgeordneten Ansprüche.

Die Erfindung soll anhand nachstehenden Ausführungsbeispiels näher erläutert werden. Es zeigen:
- Fig. 1: einen Querschnitt durch einen bei vorliegender Erfindung zum Einsatz gelangenden runden langgestreckten Körper und hier insbesondere die erforderliche Ausrichtung der Antenne der eingesetzten Transponder;
- Fig. 2: die erfindungsgemäße Anordnung mehrerer sich gegenseitig überlappender Leseantennen um das Messobjekt;
- Fig. 3: in der rechten Abbildung eine weitere Ausgestaltung der Anordnung der erfindungsgemäßen Leseantennen;
- Fig. 4: ein Prinzipschaltbild zur Ansteuerung der Leseantennen und
- Fig. 5: eine Darstellung anhand derer die Betriebsweise der vorgeschlagenen Anordnung ersichtlich wird.

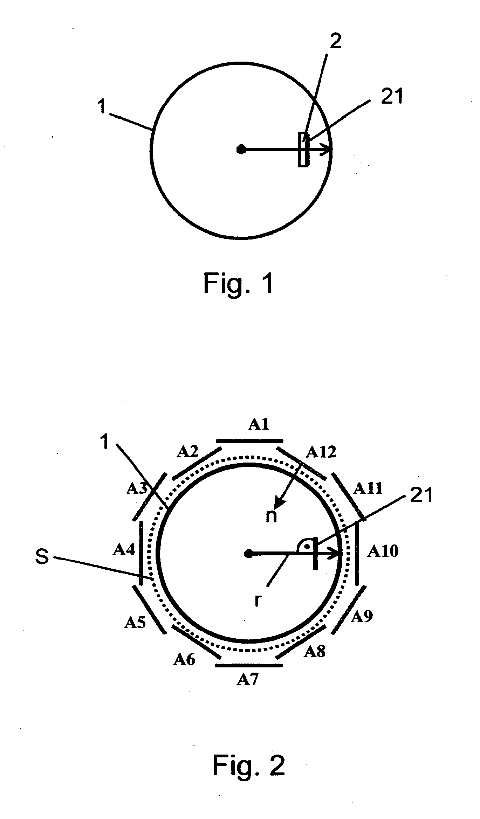

Findet vorliegende Erfindung Anwendung zur Bestimmung von Verdrehungen von Kabeln 1 während deren Einsatz, sind zur Kennzeichnung der elektrischen Leitungskabel Transponder 2 im äußeren Bereich des Kabels, bspw. nicht tiefer als 30% des Kabelradius, lateral vorgebbar beabstandet eingelassen, vorzusehen. Jeder der induktiv gekoppelten Transponder 2 ist mit einer ebenen Antenne 21 versehen. Die vorgesehenen Transponder sollen außerhalb von elektrischen Leitungen des Kabels liegen. Figur 1 verdeutlicht die Maßgabe in einer beispielhaften Querschnittsdarstellung, wobei in der Figur auf die Darstellung hier unwesentlicher, innen liegender Leitungsstränge aus Gründen der Übersichtlichkeit verzichtet wurde. Wesentlich im Rahmen vorliegender Erfindung ist lediglich, dass die Ausrichtung der auf jedem Transponder 2 vorgesehenen planen Antennenspule derart erfolgt, dass die Ebene der Antenne 21, wie in Fig. 1 dargestellt, senkrecht auf einem Radiusstrahl r zu liegen kommt. Umfangsmäßig könnten die Transponder über den Kabelquerschnittsumfang auch unterschiedlich radial verteilt, jedoch mit identischer vorstehend beschriebener Ausrichtung angeordnet sein. Herstellungsbedingt werden sie vorteilhaft jedoch lateral hintereinander in vorgebbaren Abständen in den Kabelmantel eingebracht sein.

Der laterale Abstand zwischen zwei Transpondern soll im Beispiel in der Größenordnung von 1 m liegen. Die im Kabel angeordneten Transponder 2 werden durch das erfindungsgemäß vorgeschlagene Transponder-Lesegerät erkannt und ausgelesen, welches aus mehreren, radial angeordneten Antennen besteht und bei denen die Anordnung und Lage der Antennen um das Kabel eine Zuordnung jeder Antenne zu einem im Allgemeinen äquidistanten Winkelsegment gestattet. Die vorgebbare Anzahl der um den zu vermessenden Querschnitt verteilten Antennen des Lesegerätes bestimmt hierbei die Genauigkeit der Winkelmessung. Wesentlich hierbei ist, dass die Antennen (=Spulen), im Beispiel nach Fig. 2 mit den Bezugszeichen A1 bis A12 versehen, im Rahmen der Erfindung eine vorgebbare Winkelüberlappung aufweisen, um das Erkennen und Lesen eines Transponders bei jedem beliebigen Winkel, im Rahmen der vorgegebenen Messgenauigkeit, zu ermöglichen. Auch diese Leseantennen, im Beispiel A1 bis A12, sind in sich jeweils als ebene Spulenwindungen ausgeführt, deren Normale n (im Beispiel nach Fig. 2 nur für die Antenne A12 angegeben) in Richtung des Kabelmittelpunkts weist. Die Größe der Winkelüberlappung der Antennen des Lesegerätes ist abhängig von den Parametern der konkreten Ausführung, wie z.B. von der Größe der Transponder-Antennen A1 bis A12, der Lage der Transponder-Antenne 21 im Kabel 1 und der vorgesehenen Anzahl der Antennen des Lesegerätes. Durch die Winkelüberlappung benachbarter Leseantennen entsteht natürlich die Möglichkeit, dass ein in ihr Feld geratender Transponder 2 prinzipiell durch zwei Antennen gelesen werden kann. In diesem Fall wird dann der Winkel einer dieser Antennen oder der Mittelwert des Winkels dieser beiden Antennen als Winkelmesswert festgelegt. Jede der im Beispiel vorgesehenen Antennen, A1-A12, des Lesegerätes ist im Wesentlichen rechteckig ausgegeführt, wobei die Längserstreckung parallel zur Längserstreckung des Messobjektes orientiert ist. Die Festlegung der Größe der Antennen des Lesegerätes in der Richtung quer zum Kabel ergibt sich aus der vorgegebenen Genauigkeit der Winkelmessung, der Überlappung, aus dem Kabelquerschnitt und dem Abstand zum Mittelpunkt der Antennenanordnung. Die minimale Länge der Antennen in Richtung der Kabellängserstreckung ergibt aus der Lesezeit der eingesetzten Transponder 2, welche derzeit üblicherweise im Bereich von 5ms liegt, unter der Bedingung, dass alle Antennen A1-A12 des Antennensystems in dieser Zeit einmal aktiviert werden müssen, sowie aus ihrer relativen Bewegungsgeschwindigkeit zur Leseantenne.

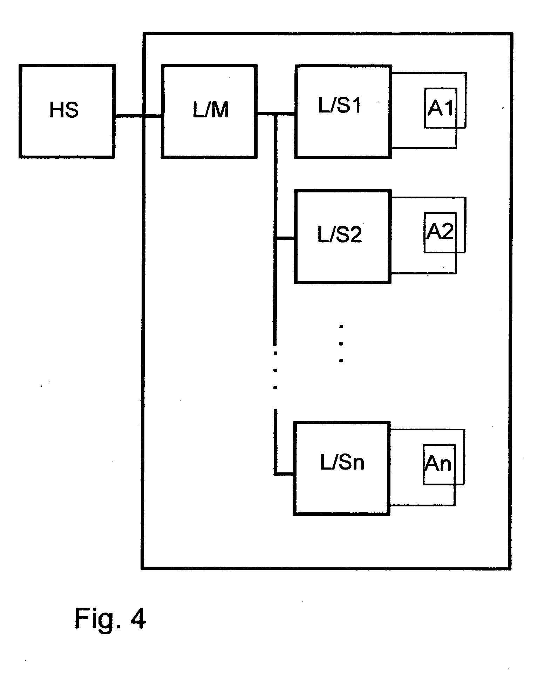

Jeder der vorgesehenen Transponder 2 verfügt im Allgemeinen über eine Identifikationsnummer, welche eine Zuordnung zum Ort (entweder als Längenangabe vom Anfang des Kabels oder als laufende Nummer) und zum Winkel des Transponders, mit denen er im Kabel eingebracht wurde, ermöglicht. Bei einer Bewegung des Kabels durch die weiter unten detaillierter beschriebene Antennen-Anordnung des Lesegerätes kann nun jedem gelesenen Transponder 2 ein Winkel zugeordnet werden. Im Allgemeinen wird ein Kabel erstmalig durch die AntennenAnordnung bewegt und die Identifikationsnummern und der gemessene Winkel der Transponder werden in einen Datenspeicher des Lesegerätes UM oder des Host-Systems HS (vgl. Fig. 4) als Referenzdaten abgelegt und dienen somit der Kalibrierung. Bei nachfolgenden Durchläufen der Transponder, beim Durchlaufen des mit ihnen bestückten Kabels durch die Lesevorrichtung, können dann die zum betreffenden Transponder gemessenen Winkel mit diesen Referenzdaten verglichen werden und so die ggf. auftretende Verdrehung des Kabels gegenüber dem Normzustand bestimmt werden. Außerdem können die Referenzdaten auch im Datenspeicher des Transponders 2 selbst abgelegt sein.

Figur 4 zeigt schematisch ein Blockschaltbild der Schaltung eines Lesegerätes nach vorliegender Erfindung.
Das Lesegerät besteht, wie zu Fig. 2 beschrieben, aus mehreren Antennen, deren konkrete Anzahl sich aus der wahlweise vorgebbaren Genauigkeit der gewünschten Winkelmessung ergibt, einem Ansteuerteil (Lesegerät/Slave L/S1 bis L/Sn) zu jeder Antenne (A1 bis An) und einem Steuerteil (Master L/M), welcher alle Abläufe steuert. Ein externes Host-System HS dient der Steuerung des Lesegerätes sowie der Datensammlung.
Für den Betrieb des Lesegerätes wird im einfachsten Fall wechselnd eine Antenne des Lesegerätes zum Lesen eines Transponders aktiviert, d.h. diese Antenne erzeugt ein induktives Wechselfeld im Bereich der Arbeitsfrequenz des Transponders (üblicherweise 13,56MHz). Wird durch diese Antenne ein Transponder 2 gelesen, so kann diesem Transponder 2 ein Winkel entsprechend der Anordnung der Antenne im Lesegerät zugeordnet und gespeichert werden.
Andernfalls wird die nächste Antenne des Lesegerätes aktiviert, welche dann versucht, den Transponder auszulesen. Innerhalb einer definierten Zeiteinheit, welche sich aus der Lesezeit pro Transponder und der Anzahl der Antennen des Lesegerätes ergibt, werden so alle Antennen einmal aktiviert, wobei die Reihenfolge der Zuschaltung der Antennen unerheblich ist.

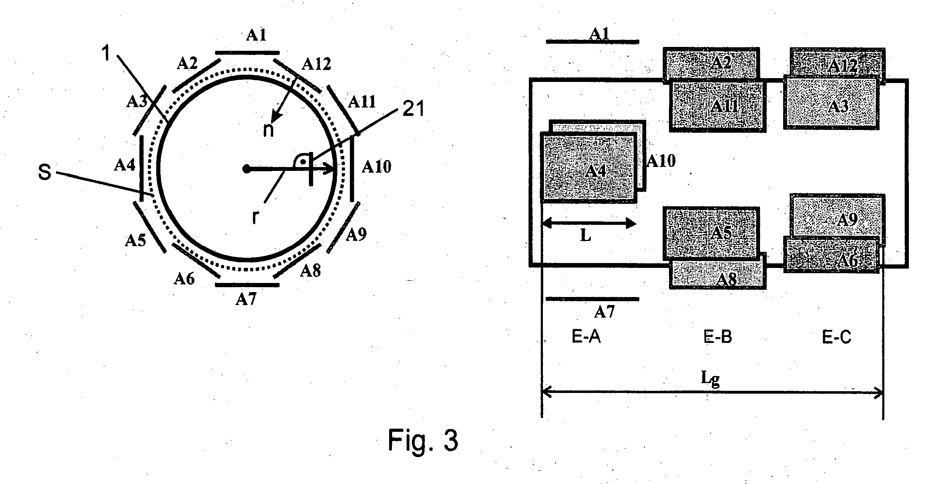

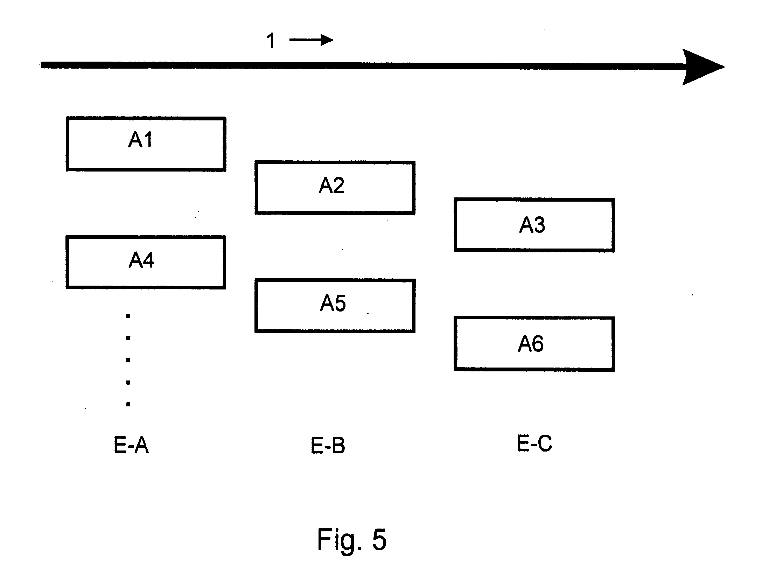

Im Allgemeinen wird durch die konkrete Applikation eine Geschwindigkeit vorgegeben, mit welcher das Kabel durch das Antennensystem bewegt wird, die entsprechend der oben angegebenen Vorschrift zu einer oft praktisch nicht mehr realisierbaren Länge der Antennenanordnung führen würde. Eine gleichzeitige Zuschaltung mehrerer oder aller der radial angeordneten Antennen führt durch die relativ großen Gegeninduktivitäten zwischen den Antennen meist zu einem "Übersprechen", so dass der Transponder 2 auf mehreren Antennen A1-A12 gelesen werden würde und so keine sichere Winkelmessung möglich wäre. Die erfindungsgemäße Lösung für dieses Problem ist eine verteilte Anordnung der vorgesehenen Antennen A1-A12 im Lesegerät auf mehreren Ebenen, im Beispiel nach Fig. 3 (rechte Abbildung) E-A bis E-C, was zu einer deutlichen Reduzierung der Gegeninduktivitäten zwischen den Antennen führt und damit bei geeigneter Wahl der Antennenanordnung auch bei Aktivierung von jeweils einer Antenne pro Ebene ein "Übersprechen" zwischen benachbarten Antennen verhindert. Vorstehend erfindungsgemäß vorgeschlagene Aufteilung der Antennen in mehrere Ebenen soll anhand der schematischen Darstellung in Figur 5 beispielhaft skizziert werden. Der lange nach rechts weisende Pfeil in Fig. 5 zeigt beispielhaft die Durchlaufrichtung des Kabels 1 und damit die Bewegung der im Kabelmantel eingebetteten Transponder.
Vorteil dieser Lösung einer gleichzeitigen Aktivierung mehrerer Antennen in unterschiedlichen Ebenen, im Beispiel E-A bis E-C, durch die beschriebene örtliche Separation gegenüber nur einer radialen Anordnung der Antennen in einer Ebene ist, dass sich durch die gleichzeitige Aktivierung von mehreren Antennen (entsprechend der Anzahl der Ebenen) die Lesezeit pro Transponder im wesentlichen um diesem Faktor (Anzahl der Ebenen) verringert und so auch das gesamte Antennensystem geometrisch verkürzt ausführbar ist.

Eine weitere Möglichkeit zur Reduzierung der Lesezeit pro Transponder und damit zur Erhöhung der maximalen Geschwindigkeit, mit der das Messobjekt (hier Kabel) durch die Leseeinheit bewegt werden kann, besteht in der frühzeitigen Auswertung der vom Transponder gelesenen Daten. Dieses Prinzip beruht auf dem starren Timing der Transponderfunktion und dem Bekanntsein der ersten Dateninformationen, welche vom Transponder gesendet werden, im speziellen Fall kann das z.B. dem Start-of-Frame (SOF) oder einer eindeutigen UID (unit identification No) entsprechen. Dieses Signal ist jedoch im Rahmen der Erfindung nicht Bedingung. Wesentlich ist die erste Erkennung der Anwesenheit eines Transponders, sobald er in den Lesebereich einer Antenne gelangt, d.h. der Zeitpunkt, ab dem eine eindeutige Kommunikation mit dem Transponder aufgebaut wird. Bei dieser Vorgehensweise werden die Daten nicht nach Empfang aller vom Transponder 2 gesandten und mittels Checksumme geprüften Daten bewertet, sondern es wird "im Suchlauf" bspw. nur das SOF-Signal gesucht und bewertet. Hierzu verfügt jeder Slave L/Sn über einen eigenen Controller. Der Master UM ist die Zeitbasis für alle Abläufe und steuert das Timing, welche Slaves L/S1 bis L/Sn (vgl. Fig. 4) zu welcher Zeit und wie lange aktiviert werden. Wird nun von keinem der pro Ebene aktivierten Slaves bspw. ein SOF-Signal zum erwarteten Zeitpunkt erkannt, so werden durch den Master unmittelbar nach diesem Nichtsenden die bisher aktivierten Slaves deaktiviert und sofort die nächsten Slaves, deren zugeordnete Antennen in anderen Ebenen angeordnet sind, aktiviert. Wird nun von einem aktivierten Slave bspw. ein SOF-Signal erkannt, so wird dies dem Master UM über eine Datenleitung mitgeteilt. Ausgelöst durch dieses Signal hält der Master die augenblicklich aktivierten Slaves weiter aktiviert, bis der jeweils innerhalb der Lesevorrichtung befindliche Transponder vollständig gelesen (und ggf. beschrieben) wurde. Durch dieses Vorgehensweise kann die Erkennungszeit für die Anwesenheit eines Transponders im Feld einer Antenne, infolge der Erstauslesung bspw. des SOF-Signals (oder vergleichbarem Signals je nach Transpondertyp) pro Antenne auf ca. 20% gesenkt werden.

Die dargestellte Figur 3 fasst zum besseren Verständnis die beiden Figuren 2 und 5 zusammen, um einen räumlichen Eindruck der Leseeinrichtung besser darzustellen. Figur 3 zeigt ein Antennensystem des Lesegerätes beispielhaft bestehend aus zwölf Antennen A1 bis A12, welches somit die Winkelmessung mit einer Auflösung in 30°-Segmenten gestattet. Der Transponder muss bei lateraler Bewegung durch das Antennensystem gemäß vorliegender Erfindung in jeder Winkelposition sicher gelesen werden können. Aus diesem Grund sind die Antennen so angeordnet, dass es zu einer Winkelüberlappung der Antennen (siehe Querschnitt links im Bild), aufgeteilt über die hier vorgesehenen drei Ebenen (E-A bis E-C) (siehe Querschnitt rechts im Bild), kommt.
In vorstehend beschriebener spezieller Ausführung werden in jeder Ebene jeweils eine Antenne und damit immer drei Antennen gleichzeitig aktiviert. Hierbei hat die Anordnung in den hier dargestellten drei Ebenen mehrere Vorteile:
1. Durch diese Anordnung wird die induktive Kopplung zwischen den Antennen deutlich reduziert, so dass überhaupt erst einmal drei Antennen gleichzeitig aktiviert werden können, was insbesondere bei dünneren Querschnitten des Kabels 1 von Bedeutung ist.
2. Durch die im Beispiel vorgesehenen drei Ebenen ist eine Winkelüberlappung möglich, ohne dass sich die Antennen selbst geometrisch überlappen müssen. Hierdurch werden parasitäre Effekte wie "Übersprechen" oder Verstimmung der Antennenkreise vermieden und alle Antennen können im gleichen Abstand zum Zentrum der Messanordnung angeordnet werden.
3. Durch die gleichzeitige Aktivierung von jeweils in drei Ebenen befindlichen drei Antennen, wird die Zeit für den Durchlauf einer Aktivierung aller Antennen deutlich reduziert. Diese Zeit sowie die maximale Geschwindigkeit der Kabelbewegung bestimmen die Antennenlänge L. Für die Anordnung in drei Ebenen ist diese Zeit gleich der 3-fachen Zeit für den Empfang bspw. des SOF-Signals plus der 1-fachen Zeit für den Empfang der kompletten Daten (ID-Nummer) plus noch einmal der 1-fachen Zeit für den Empfang bspw. des SOF-Signals (der Transponder könnte ja gerade zeitlich so ungünstig in den Lesebereich einer Antenne geraten, dass diese kurz zuvor die Antenne aktiviert hatte, die Antenne ist also zu dieser Zeit aktiviert und der Transponder kann trotzdem nicht gelesen werden, weil der "Start" fehlt).

Es ist unerheblich, in welchem der vorstehend genannten vier Aktivierungszeitbereichen eines "Umlaufs" eine konkrete Antenne aktiviert wird. Wichtig ist nur, dass hierbei pro Ebene immer nur eine Antenne aktiviert wird. Vorteilhaft (aber nicht Bedingung) ist natürlich, dass die drei in einem Zeitbereich aktivierten Antennen untereinander eine möglichst minimale induktive Kopplung aufweisen, was aber prinzipiell durch die Anordnung in drei Ebenen gegeben ist. Zusätzlich könnte man auch noch den Abstand zwischen den Ebenen vergrößern. Selbstverständlich liegen, je nach Aufgabenstellung, auch Antennensysteme mit mehr oder weniger Antennen pro Ebene und auch solche mit nur zwei oder mehr als drei Ebenen im Rahmen der Erfindung. Vorteilhaft sind die Antennen einer Ebene radial voneinander möglichst weit zu beabstanden. Im Beispiel nach Fig. 3 sind somit die Antennen A1 und A7 gegenüber und zu den Antennen A4 und A10 im Winkel von 90° positioniert. Oben ausgeführte spezielle Ausführung beschreibt die zum Anmeldezeitpunkt für die konkrete Aufgabenstellung beste Ausführungsform. Die spezielle zu lösende Aufgabe bestand dabei darin, ein elektrisches Kabel 1 mit einem Durchmesser von 45 mm und einer Bestückung mit Transpondern 2 mit Durchmessern ihrer Antennen 21 von ca. 7 mm, angeordnet in Abständen von 1 m bei Kabeldurchlaufgeschwindigkeiten von 1...4 m/s mit einer Winkelgenauigkeit von 30° bzgl. der Lage der Transponder zu vermessen. Nach obigen Betrachtungen und Maßgaben konnte dabei eine Gesamtlänge Lg der Ausleseeinrichtung in Richtung der Kabelbewegung von ca. 30 cm realisiert werden.

Nach obigen Erläuterungen ist ersichtlich, dass bei Einsatz von Transpondern gleicher Reaktions- und Antwortzeit in Abhängigkeit von der Durchlaufgeschwindigkeit der transponderbestückten Messobjekte eine Vielzahl unterschiedlicher spezieller Ausführungen für die Leseeinheit möglich sind. In der Grundtendenz heißt das aber immer:
- höhere Durchlaufgeschwindigkeiten erfordern größere Antennenlängen L und/oder mehrere Ebenen;
- eine erhöhte Winkelauflösung erfordert nach vorliegender Erfindung ebenfalls eine Erhöhung der Anzahl von Einzelantennen in den unterschiedlichen Ebenen. Werden also, um im obigen speziellen Beispiel zu bleiben, bei einer Bestimmung der Anwesenheit eines Transponders in einem 30°-Segment zwölf Antennen in drei Ebenen benötigt, sind es bei einem Winkelsegment von 15° bereits 24 entsprechend versetzt angeordnete Einzelantennnen, die im Zweifel auch über mehr als 3 Ebenen verteilt angeordnet werden müssen, um ihre gegenseitige Kopplung zu vermeiden.
Weiterhin liegen andere Arten Ansteuerungen der Einzelantennen im Rahmen der Erfindung, solange das Prinzip der gleichzeitigen Ansteuerung je einer Antenne pro Ebene eingehalten wird.

Wird das, bevorzugt in äquidistanten Abständen, mit Transpondern versehene Stranggut einem einmaligen Kalibrierdurchlauf durch erfindungsgemäße Leseeinrichtung unterworfen, können bei Folgedurchläufen des gleichen Strangguts, der Detektion der Lage der Transponder dabei und Vergleich mit den Kalibrierdaten in situ Verdrallungen des Strangguts detektiert werden. Auf diese Weise lassen sich sehr effektiv bspw. Stromkabel an Krananlagen, die einem ständigen Auf- und Abrollen unterworfen sind, überwachen und aus den mit vorliegender Erfindung gewonnenen Daten bspw. Steuergrößen für den Motorenanzug und/oder Geschwindigkeit ableiten, die einem Verdrallen des Kabels entgegen wirken und damit dessen Lebensdauer erheblich erhöhen.
Der große Vorteil der erfindungsgemäßen Anordnung besteht darin, dass die genaue Lage der Transponder im Stranggutmantel völlig unerheblich ist, weil durch die erfindungsgemäße Anordnung eine automatische Erkennung in jedem Fall gewährleistet ist, wenn die oben beschriebenen Detailmaßgaben in Abhängigkeit von der vorgegebenen Durchlaufgeschwindigkeit des Strangguts eingehalten werden.

Im Rahmen der Erfindung sind die genannten Antennen des Lesegerätes dabei bevorzugt, oberflächengeschützt und/oder eingebettet in eine im Innenquerschnitt dem Außenquerschnitt des Messobjekts in der Geometrie angepasste Hohlform S (vgl. Fig. 2 und 3) angebracht. Diese Hohlform S ist im Falle kreisrunder Messobjekte bevorzugt durch zwei zylinderförmige, eröffenbare Segmente, wie z.B. Halbschalen gebildet, so dass diese Vorrichtung leicht in bereits bestehende Anlagen mit nichtzugänglichen Enden des Messgutes auch nachträglich problemlos, das Messobjekt umfassend, eingebaut werden kann. Im Übrigen gewährleistet die Hohlform durch hermetischen Verschluss mit dem Rest der Lesevorrichtung den Schutz der Antennenansteuerelektronik.

Die Gesamtlänge Lg, die von den eingesetzten Leseantennen eingenommen wird, sollte im Rahmen der Erfindung maximal so groß sein, dass sie in Größenordnung der Abstände der Transponder liegt, die im Messgut verbracht sind.

Alle in der Beschreibung, den Zeichnungen und Ansprüchen aufgeführten Merkmale können sowohl einzeln als auch in beliebiger Kombination miteinander erfindungswesentlich sein.

### Bezugszeichenliste

- 1: langgestreckter Körper (Kabel)
- 2: Transponder
- 21: Transpondernatenne
- A1-A12: Antennen des Lesegerätes
- L: Länge einer Einzelantenne
- Lg: Gesamtlänge der Antennenlängen bei mehreren Ebenen
- E-A-E-C: Antennenebenen
- n: Antennennormale
- r: Kabelradius
- L/S1-Sn: Ansteuerteil
- L/M: Master für Ansteuerteile
- HS: Hostsystem
- S: Hohlform

## Patentansprüche

1. Anordnung zur Bestimmung von Verdrehungen von Stranggut und/oder längeren elektrischen Leitungskabeln runden Querschnitts, wobei in den Außenumfang des langgestreckten Körpers (1) Transponder (2) lateral und vorgebbar beabstandet eingebracht sind, **dadurch gekennzeichnet, dass** für die Transponder (2) passive, induktiv gekoppelte Transponder gewählt sind, wobei die Ausrichtung deren Antennen (21) derart festgelegt ist, dass die Ebene der Antenne im Wesentlichen senkrecht zu einem Radiusstrahl (r) zum Mittelpunkt des Querschnitts des Köpers (1) ausgerichtet ist, wobei der Körper (1) im Messbereich von in mehreren separat ansteuerbaren und über seinen Umfang verteilten spulenförmig, im Wesentlichen rechteckig ausgeführten Antennen (A1-A12) umfasst ist, wobei benachbarte Antennen zueinander überlappend angeordnet sind.

2. Anordnung nach Anspruch 1, **dadurch gekennzeichnet, dass** die Länge (L) einer einzelnen Antenne (An) so lang ausgeführt ist, dass sie in Abhängigkeit von der Durchlaufgeschwindigkeit des Körpers (1) eine gesicherte Kommunikation mit dem in ihr Feld gelangenden Transponder (2) im Körper (1) gewährleistet.

3. Anordnung nach Anspruch 1, **dadurch gekennzeichnet, dass** die den Körper (1) radial umfassenden Antennen (A1-A12) gruppenweise in mehreren lateral hintereinander angeordneten Ebenen (E-A... E-C) aufgeteilt angeordnet sind.

4. Anordnung nach Anspruch 3, **dadurch gekennzeichnet, dass** die Antennen einer Ebene voneinander geometrisch radial so weit, wie möglich beabstandet sind.

5. Anordnung nach Anspruch 3, **dadurch gekennzeichnet, dass** die von den Antennen (A1-A12) aller Ebenen eingenommene Gesamtlänge (Lg) in Abhängigkeit von der vorgegebenen Durchlaufgeschwindigkeit des Körpers (1) und der Zeit zum gesicherten Kommunikationsaufbau einer Einzelantenne (An) mit einem Transponder (2) messaufgabenspezifisch angepasst festlegbar und kleiner als der Abstand benachbarter Transponder (2) im Körper (1) ist.

6. Anordnung nach einem der vorstehenden Ansprüche, **dadurch gekennzeichnet, dass** jeder Antenne (A1 bis An) zumindest ein getrennt ansteuerbares eigenes Ansteuerteil (US1 bis L/Sn) zugeordnet ist, dessen Kommunikation über einen Master (L/M) derart ansteuerbar ist, dass zur gleichen Zeit nur Antennen angesteuert werden, die geometrisch soweit voneinander entfernt sind, dass ihr induktives Übersprechen oder Verstimmen ausgeschlossen ist.

7. Anordnung nach Anspruch 6, **dadurch gekennzeichnet, dass** bei Aufteilung der Antennen (A1 bis A12) in mehrere Ebenen (E-A bis E-C) pro Ebene stets wenigstens eine Antenne zugleich ansteuerbar ist.

## Claims

1. Arrangement for determining torsions of elongated bodies and/or of longer electric cables of round cross section, wherein transponders (2) are provided laterally and in a preselectable spaced relation in the outer circumference of the elongated body (1), **characterized in that** passive inductively coupled transponders are selected for the transponders (2), wherein the alignment of the aerials (21) of said transponders is such defined that the plane of the aerial being substantially at right vertically to a radial beam (r) is aligned to the center of the cross-section of the body (1), wherein the body (1) within the measurement range is encompassed by a plurality of substantially rectangular aerials (A1-A 12), said aerials being distributed along the circumference of said body and being of coil profile and individually controllable, wherein adjacent aerials are arranged mutually overlapping.

2. Arrangement as claimed in claim 1, **characterized in that** the length L of any individual aerial (An) is embodied in such a length that, in dependence of the passage speed of the body (1), it ensures a save communication with the transponder (2) in the body (1) arriving in its field.

3. Arrangement as claimed in claim 1, **characterized in that** the aerials (A1 - A12) radially encompassing the body (1) are divided in groups arranged in a plurality of planes (E-A...E-C) laterally one behind the other.

4. Arrangement as claimed in claim 3, **characterized in that** the aerials of one plane are geometrically and radially spaced apart from one another as wide as possible.

5. Arrangement as claimed in claim 3, **characterized in that** the entire length (Lg) occupied by the aerials (A1 - A12) of all planes in dependence of the preselected passage speed of the body (1) and the time for setting up a safe communication of an individual aerial (An) with a transponder (2) is definable adapted according to the specific measuring task and is smaller than the space to the adjacent transponder (2) within the body (1).

6. Arrangement as claimed in any of the preceding claims, **characterized in that** at least one own control member (L/S1 to L/Sn) individually controllable is associated to each aerial (A1 to An), the communication of said control member is controlled via a master module (L/M) in such a manner that, at one time, only aerials are controlled that are geometrically such distant from one another that any inductive crossover or detuning of said aerials is excluded.

7. Arrangement as claimed in claim 6, **characterized in that** when the aerials (A1...A12) are distributed over a plurality of planes (E-A - E-C), at least one aerial is at one time controllable per plane.

## Revendications

1. Configuration destinée à déterminer les forces de torsions auxquelles sont soumis certains objets de forme allongée et/ou des câbles électriques plus ou moins longs, de section circulaire, chacun des corps (1) allongés étant doté de transpondeurs (2) disposés de manière latérale selon des intervalles préalablement préétablis sur la circonférence du corps allongé, **caractérisée en ce que** les transpondeurs (2) mis en place sont des transpondeurs passifs à couplage inductif, la direction des antennes (21) étant choisie néanmoins de manière à ce que le plan de l'antenne soit pour l'essentiel positionné perpendiculairement à un rayon partant du centre (r) de la section du corps (1), et que, dans la zone de mesure, le corps (1) soit entouré de plusieurs antennes (A1-A12), essentiellement de forme rectangulaire, réparties sur la circonférence de la section du corps comme une bobine et pouvant être activées séparément, les antennes adjacentes se trouvant disposées en chevauchement les unes par rapport aux autres.

2. Configuration suivant la revendication 1 **caractérisée en ce que** la longueur (L) d'une antenne (An) est dimensionnée de sorte qu'en fonction de la vitesse de passage du corps (1), elle assure la communication correcte dans le corps avec le transpondeur (2) passant par son champ.

3. Configuration suivant la revendication 1 **caractérisée en ce que** les antennes (A1-A12) disposées de manière radiale autour du corps (1) sont réparties par groupes sur plusieurs plans latéraux disposés successivement (E-A... E-C).

4. Configuration suivant la revendication 3 **caractérisée en ce que** les distances géométriquement radiales entre les antennes disposées sur le même plan soient aussi grandes que possible.

5. Configuration suivant la revendication 3 **caractérisée en ce que** la longueur totale (Lg) des antennes (A1-A12) implantées sur tous les plans successifs peut être prédéfinie en fonction des mesures spécifiques à effectuer, de la vitesse de passage préétablie du corps (1) ainsi que du temps nécessaire pour établir correctement la communication de l'une des antennes, prise individuellement (An), avec un transpondeur (2) en assurant que cette longueur ne soit inférieure à la distance entre les transpondeurs (2) adjacents implantés dans le corps (1).

6. Configuration suivant une des revendications précédentes **caractérisée en ce qu'**à chacune des antennes (A1 à An) est attribué au moins un dispositif d'excitation propre à la dite antenne, fonctionnant individuellement (L/S1 à L/Sn), et dont la communication par l'intermédiaire d'un master (L/M) peut être activée de manière à s'assurer que soient simultanément activées seules les antennes géométriquement suffisamment distantes les une des autres de manière à exclure tout réenregistrement et tout désaccord par induction.

7. Configuration suivant la revendication 6 **caractérisée en ce que** lors de la répartition des antennes (A1 à A12) sur plusieurs plans (E-A à E-C), on assure qu'à tout moment puisse être activée au moins une antenne sur chacun des plans.
